# EUROPEAN PATENT APPLICATION

(11) **EP 4 694 030 A1**
(43) Date of publication of application: **11.02.2026**
(21) Application number: 25195009.3
(22) Date of filing: 08.08.2025
(51) Int. Cl.: H04L 9/32, H04L 9/00

(54) **TRUSTED TOKENIZED ASSET TRANSACTIONS**

(30) Priority: 09.08.2024 US 202463681397 P
(71) Applicant: Integrated Management Systems Hong Kong Limited, Wong Chuk Hang (HK)
(72) Inventor: Choudhary, Raviranjan, Wong Chuk Hang, Hong Kong (HK); Srivastava, Sidharth, Wong Chuk Hang, Hong Kong (HK); Chan, Alfred, Wong Chuk Hang, Hong Kong (HK); Ling, Gordon, Wong Chuk Hang, Hong Kong (HK)
(74) Representative: Cabinet Chaillot

(57) **Abstract**

In one or more embodiments, the present invention provide a system that uses two unique and random codes based on cryptographic blockchain key pairs to represent both the physical asset (private code) and the digital or virtual asset (public code) as a token. In various embodiments, these codes are initially recoded and associated to assets by a known trusted authority and all subsequent data generated by the movement, use, manipulation, and exchange of the asset during its whole lifecycle can be trust-linked (forwards and backwards) using either the tokenized digital version or the physical version, independently from the SAME trust-chain of data recorded on blockchains.

## Description

### CROSS REFERENCE TO RELATED APPLICATIONS

This application claims the benefit of U.S. provisional patent application serial number 63/681,397 entitled "Trusted Tokenized Asset Transactions," filed August 9, 2024, and incorporated herein by reference in its entirety.

### FIELD OF THE INVENTION

The present invention relates to a blockchain based system for representing both a physical asset (private code) and a corresponding digital or virtual asset (public code) as a token. In certain embodiments, the present invention relates to a blockchain based system for representing both the physical asset (private code) and the digital or virtual asset (public code) as a token to provide not only trusted data to interested parties but also authenticity of the physical asset and a complete history of its activities.

### BACKGROUND OF THE INVENTION

Blockchain technology securely and transparently stores distributed data with the benefit of implicit trust. However, transactions performed off-chain are inherently untrusted. Porting these off-chain transactional data to a blockchain does not automatically introduce data trust. Virtually representing real-world tangible asset in the form of blockchain stored tokens does not offer assurances of tokenized asset authenticity nor trust in the token's associated transactional data. In these prior art systems, the real world asset (RWA) tokens on the blockchain alone are not sufficient to establish independent trust in the token's representation of the asset.

What is needed in the art is a system for porting this off-chain transactional data to a blockchain, without the limitations of prior systems.

### SUMMARY OF THE INVENTION

In one or more embodiments, the present invention provide a system that uses two unique and random codes based on cryptographic blockchain key pairs to represent both the physical asset (private code) and the corresponding digital or virtual asset (public code) as a token. In various embodiments, these codes are initially recoded and associated to assets by a known trusted authority and all subsequent data generated by the movement, use, manipulation, and exchange of the asset during its whole lifecycle can be trust-linked (forwards and backwards) using either the tokenized digital version or the physical version of the asset, independently, and from the SAME trust-chain of data recorded on various blockchains.

Tokenizing a tangible asset involves several preliminary steps prior to minting the associated token. These off-chain transactions are performed by the asset owner, manufacturer, or authorized representative. The asset itself typically has a well-defined life cycle. At any point between asset creation and tokenization, an explicitly trusted authority is required to establish a recognized and trusted origin point for the asset. Trusted authority can be the asset brand manufacturer, third-party trusted authority, or Government authority. The earlier the point in the asset's lifecycle that a trusted origin point can be established, the stronger the tokenized asset's trust chain will be. This explicitly trusted origin point is referred to herein as the Trust Anchor. All subsequent token related data and transactions written to a blockchain will chain reference back to the Trust Anchor origin transaction. This provides not only trusted data to interested parties, but also confirms the authenticity of the physical asset and provides the complete history of its activities.

In a first aspect, the present invention is directed to a system for trust-linking data generated by the movement, use, manipulation, and exchange of a physical and/or virtual asset during a whole lifecycle, said one of physical and/or virtual asset using the tokenized digital version or physical version of said physical and/or virtual asset, independently from the same trust-chain of data recorded on two or more blockchains. In various embodiments, the present invention further comprises a code pair comprising a private code representing a physical asset and a public code representing a digital or physical asset, wherein said code pair is represented as fungible or non-fungible token. In some embodiments, the system for trust-linking data of the present invention includes any one or more of the above referenced embodiments of the first aspect of the present invention further comprising a code pair comprising a private code representing a physical asset and a public code representing a digital or physical asset, wherein said code pair is represented as multiple common fungible tokens.

In one or more embodiments, the system for trust-linking data of the present invention includes any one or more of the above referenced embodiments of the first aspect of the present invention, wherein said private code and said public code are generated by the steps of: designating a trust anchor authority having a publicly recognized wallet on a publicly recognized wallet address on a Level 1 (L1) or Level 2 (L2) public anchor codes blockchain running on a computer operably connected to a computer network or combination of linked computer networks running a blockchain platform capable of creating a fungible or non-fungible token; directing said trust anchor authority to generate a random private key and saving it to a block of an anchor codes blockchain running on said blockchain platform as an unassigned code registration; generating a public key from said random private key using a digital signature algorithm (DSA) running on said blockchain platform; generating a 20 byte public address from said public key by first generating a 32 byte hash value for said cryptographic public key and then removing the first 12 bytes to produce said 20 byte public address, wherein said private key and said public address are together comprise an anchor code pair; generating a private code from said private key using an irreversible hashing algorithm and saving said private code to platform for traceability purpose; and generating a public code from said identifying information for an asset and said public address using an irreversible hashing algorithm and saving said public code to public blockchain for data traceability. In some embodiments, the system for trust-linking data of the present invention includes any one or more of the above referenced embodiments of the first aspect of the present invention, wherein the L1 or L2 public anchor codes blockchain can be accessed through the internet.

In one or more embodiments, the system for trust-linking data of the present invention includes any one or more of the above referenced embodiments of the first aspect of the present invention wherein said trust anchor authority is selected from the group consisting of asset brand manufacturers, third-party trusted authorities, Government authorities and combinations thereof.

In various embodiments, the fungible or non-fungible tokens may be created using any suitable blockchain platform. In some embodiments, the system for trust-linking data of the present invention includes any one or more of the above referenced embodiments of the first aspect of the present invention wherein said token is created under ERC-721 or ERC1155 non-fungible token standards and generated through the ETHEREUM^{™}, ETHEREUM^{™} Classic, of ETHEREUM^{™} Virtual Machine (EVM) blockchain platform running on said computer. In various embodiments, the system for trust-linking data of the present invention includes any one or more of the above referenced embodiments of the first aspect of the present invention wherein the blockchain platform is selected from the group consisting of ETHEREUM^{™}, ETHEREUM^{™} Classic, ETHEREUM^{™} Virtual Machine (EVM). EOS, DFINITY, and HYPERLEDGER^{™}. In one or more embodiments, the system for trust-linking data of the present invention includes any one or more of the above referenced embodiments of the first aspect of the present invention, wherein the blockchain platform has the ability to execute smart contract or chain code. In one or more embodiments, the system for trust-linking data of the present invention includes any one or more of the above referenced embodiments of the first aspect of the present invention wherein the blockchain platform is ETHEREUM^{™}, ETHEREUM^{™} Classic, or ETHEREUM^{™} Virtual Machine (EVM).

In one or more embodiments, the system for trust-linking data of the present invention includes any one or more of the above referenced embodiments of the first aspect of the present invention wherein the step of generating public key is performed using an Elliptic Curve Digital Signature Algorithm. In some embodiments, the system for trust-linking data of the present invention includes any one or more of the above referenced embodiments of the first aspect of the present invention wherein the step of generating a 20 byte public address in is performed using a Keccak-256 hashing algorithm.

In particular embodiments, the system for trust-linking data of the present invention includes any one or more of the above referenced embodiments of the first aspect of the present invention wherein the step of generating the public code further comprises the steps of: calculating a first hash value by running said identifying information through an irreversible hashing algorithm; calculating a second hash value by running said identifying information through an irreversible hashing algorithm; and calculating the public code by combining said first and second hash values and running the combined first and second hash values through an irreversible hashing algorithm, thereby linking the asset to the public code.

In one or more embodiments, the system for trust-linking data of the present invention includes any one or more of the above referenced embodiments of the first aspect of the present invention wherein the said first hash value is calculated using a sha-256 hashing algorithm. In some embodiments, the system for trust-linking data of the present invention includes any one or more of the above referenced embodiments of the first aspect of the present invention wherein the said second hash value is calculated using a sha-256 hashing algorithm. In certain embodiments, the system for trust-linking data of the present invention includes any one or more of the above referenced embodiments of the first aspect of the present invention wherein the said public code is calculated using a sha-256 hashing algorithm.

In various embodiments, the system for trust-linking data of the present invention includes any one or more of the above referenced embodiments of the first aspect of the present invention wherein said identifying information is one or more of a serial number, an identification number, a unique product public code, and a stock-keeping unit (SKU) for said asset. In some embodiments, the system for trust-linking data of the present invention includes any one or more of the above referenced embodiments of the first aspect of the present invention further comprising recording one or more origin transactions mapping an asset to an unassigned code registration on said anchor codes blockchain. In one or more embodiments, the system for trust-linking data of the present invention includes any one or more of the above referenced embodiments of the first aspect of the present invention further comprising recording one or more origin transactions of a specific tangible asset category to said anchor codes blockchain.

In various embodiments, the system for trust-linking data of the present invention includes any one or more of the above referenced embodiments of the first aspect of the present invention wherein each Anchor origin transaction contains a data structure referencing tangible asset categories recorded therein and links to one or more secondary public or private website linked to or comprising blockchain URLs containing related asset and token information. In some embodiments, the system for trust-linking data of the present invention includes any one or more of the above referenced embodiments of the first aspect of the present invention wherein each Anchor origin transaction contains a data structure referencing tangible asset categories recorded and links to secondary public and/or private website and blockchain URLs of related asset and token information. In some embodiments, the system for trust-linking data of the present invention includes any one or more of the above referenced embodiments of the first aspect of the present invention further comprising recording an origin transaction to said anchor codes blockchain tokenizing a physical asset to form a non-fungible token comprising key/value pairs that provide an asset's description, attributes characteristics and/or values, wherein said token is saved to an asset tokens blockchain.

In a second aspect, the present invention is directed to a method of forward data trust-chaining using the systems described above comprising: scanning a physical asset's private code from a front-end mobile application or web application and calling the backend API; fetching the Key pair from the backend API, retrieving the public information for key pair from blockchain, and retrieving data from the blockchain; using the data retrieved from blockchain, go to verification URL; follow the Verification URL forward to a product web site using metadata of a tokenized data structure; identifying the anchor code and owner detail on a product web site linked to said Verification URL; follow the Anchor code URL to blockchain transaction which contains product transaction details and secondary blockchain transaction URL; and cross matching the product details on the product web site and the token on the blockchain to confirm authenticity of the product.

In another aspect, the present invention is directed to a method of reverse data trust-chaining comprising using the system described above comprising: accessing a virtual asset's Public Code on the consumer site or in a token metadata, said consumer site comprising links to a Verification URL and an anchor code URL; following the Verification URL forward to a product website comprising an anchor code and owner details; following the anchor code URL to a blockchain transaction containing product transaction details and secondary blockchain transaction URL, and cross matching the details for the product on the product website and the token on the blockchain.

### BRIEF DESCRIPTION OF THE DRAWINGS

For a more complete understanding of the features and advantages of the present invention, reference is now made to the detailed description of the invention along with the accompanying figures in which:
FIG. 1 is a schematic diagram showing the Private Key, Public Key, Private Code, and Public code according to one or more embodiments of the present invention;
FIG. 2 is a schematic diagram showing a path for creation of the Public Key and Public address from the randomly generated Private Key according to one or more embodiments of the present invention;
FIG. 3A are schematic diagrams showing paths for: the creation of private code from the private key (FIG. 3A); and the formation of the Public code from hashes of asset information and the Public address (FIG. 3B), according to one or more embodiments of the present invention;
FIG. 4 is a schematic diagram outlining a pathway for generating the code pair and saving it to the Anchors code blockchain and generation of a non-fungible token and saving it to the Asset Tokens blockchain according to one or more embodiments of the present invention illustrating use with single physical assets with single owner;
FIG. 5 is a schematic diagram showing a general process for generation of anchor categories, recording them to a variety of blockchains, and showing forward and reverse trust linking, according to one or more embodiments of the present invention;
FIG. 6 is a schematic diagram showing the system for trust-linking data according to the present invention illustrating shared ownership where one physical asset is owned by multiple users;
FIG. 7 is a schematic diagram showing application of the system for trust-linking data of the present invention applied to whiskey over its entire life cycle;

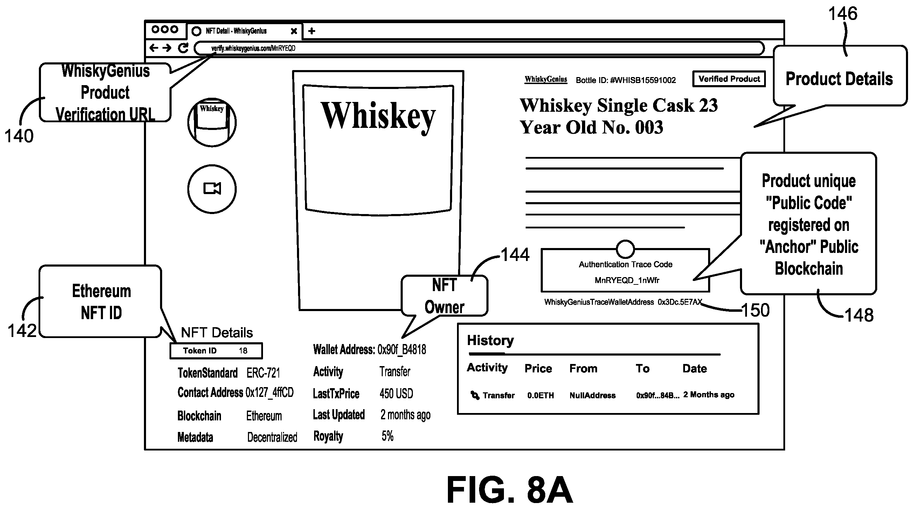

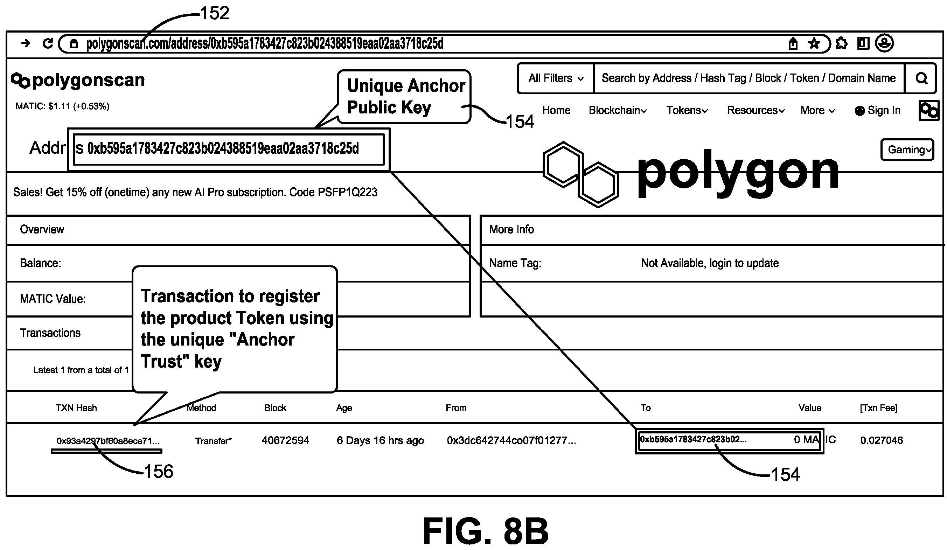

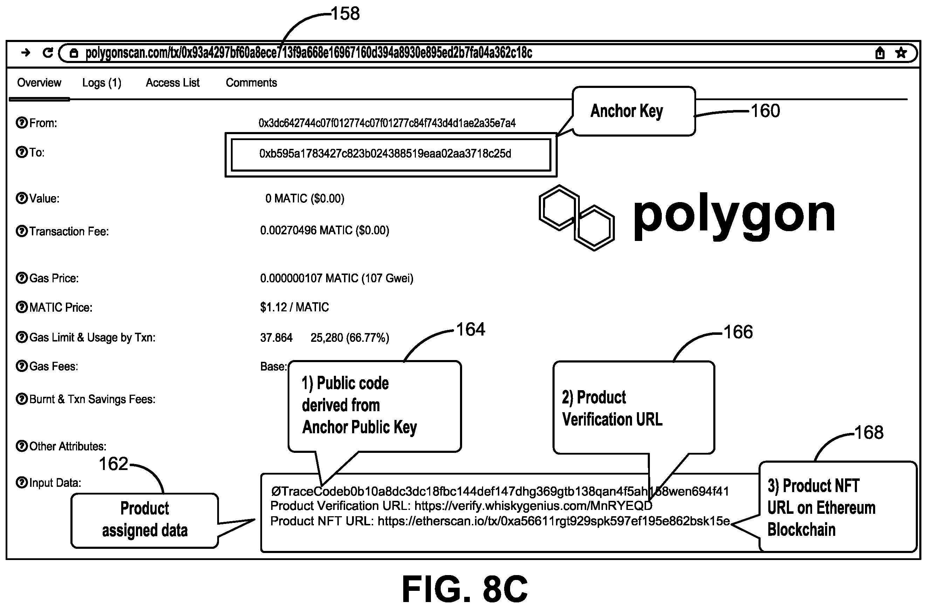

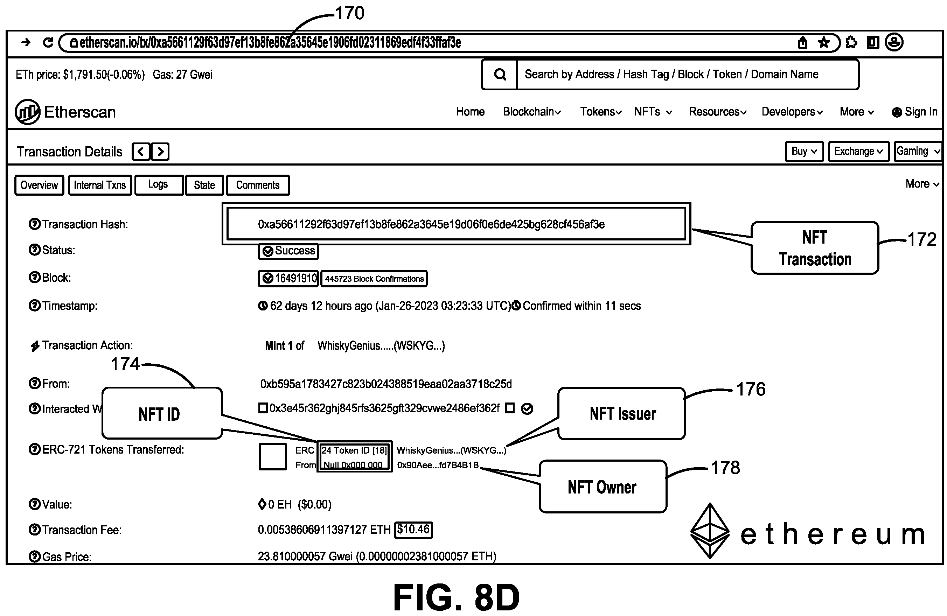

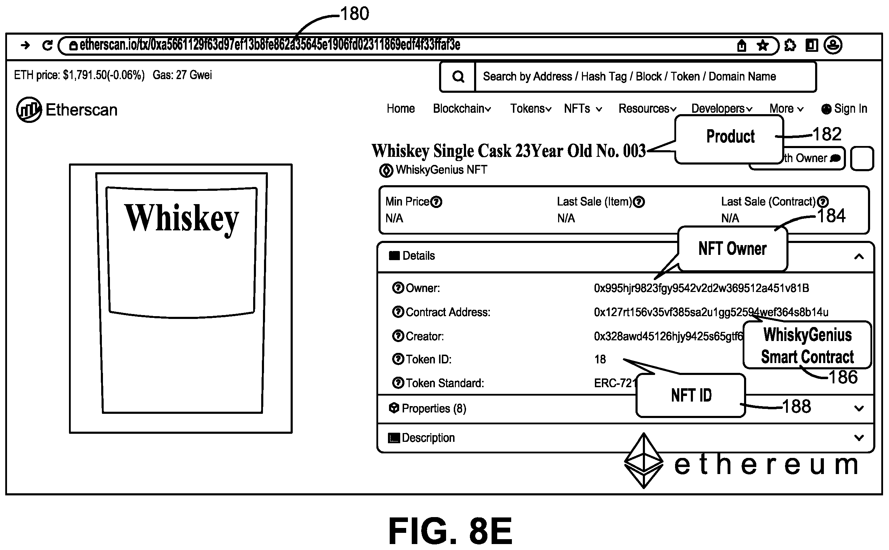

FIGS. 8A-E are annotated series of printouts showing application of the present invention to bottles of whiskey, where FIG. 8A is an annotated computer screenshot accessible through Product Verification URL using the public code registered on the anchor public blockchain providing product details, the NFT (token) ID, and NFT owner; FIG. 8B is an annotated computer screenshot of a webpage accessible at a URL showing a the unique Anchor public key and showing registration of same on the blockchain; FIG. 8C is an annotated computer screenshot of a webpage accessible using a URL showing the transaction hash generated by the registration, the anchor key, and a product assigned data field, which shows a public code derived from an anchor key, the product verification URL and the Product NFT URL of the blockchain; FIG. 8D is an annotated computer screenshot showing a webpage accessible using the Product NFT URL and showing the NFT transaction hash, NFT ID, NFT Issuer, and NFT Owner; and FIG. 8E is an annotated computer screenshot of a webpage accessible using a URL showing a NFT contract address (smart contract address) identifying the product, NFT owner, smart contract and NFT ID;

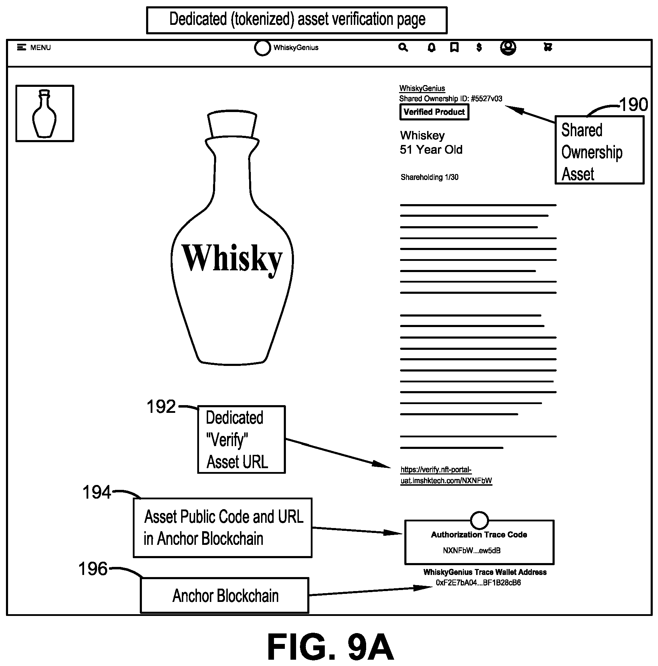

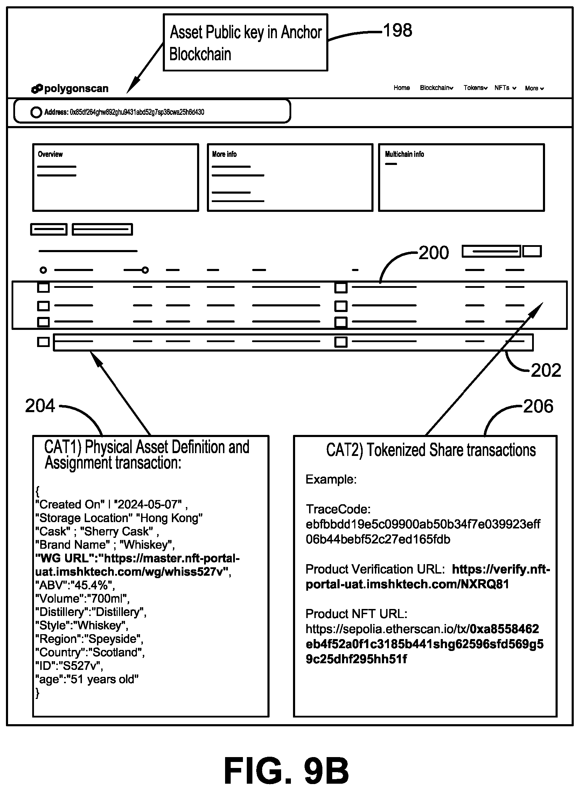

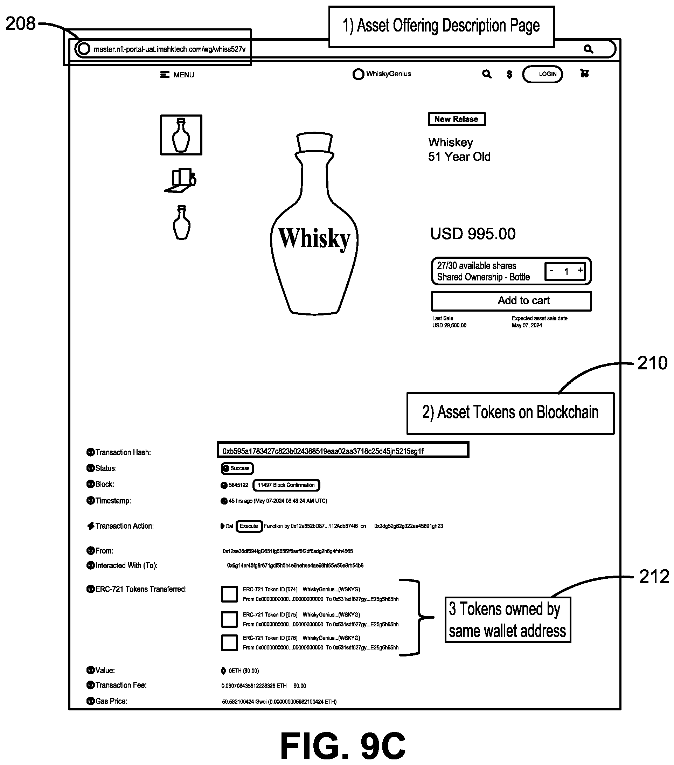

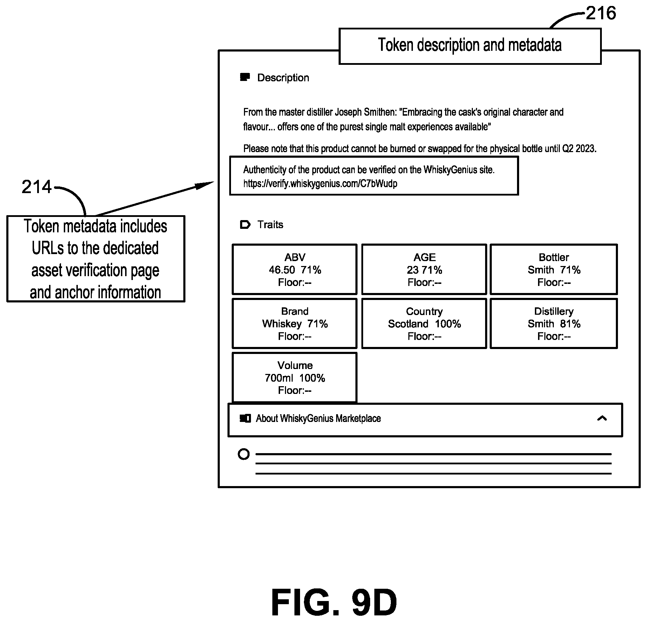

FIG. 9A-D annotated series printouts showing application of the present invention to a bottle limited edition whiskey, where FIG. 9A is an annotated computer screenshot showing a dedicated (tokenized) asset verification webpage for a single bottle of blended Scotch whiskey from a lot of 30 bottles, showing the shared ownership ID, dedicated asset verification URL, asset public code and URL in the anchor blockchain and the anchor authority; FIG. 9B is an annotated computer screenshot of a webpage accessible using the asset public key in the anchor blockchain and showing tokenized share transactions, Physical Asset Definition and assignment transactions, the data structure for physical asset definition and assignment transaction, and a data structure for tokenized share transactions; FIG. 9C is an annotated computer screenshot of an asset offering description webpage showing the asset tokens on the blockchain and the 3 other tokens owned by the same address; and FIG. 9D is an annotated computer screenshot showing token description and token metadata from a public market place webpage showing including URLs to the dedicated asset valuation page (FIG. 9C) and anchor information; and
FIG. 10 is a schematic diagram showing the system for trust-linking data according to the present invention showing forward and reverse trust linking.

### DETAILED DESCRIPTION OF THE ILLUSTRATIVE EMBODIMENTS

The following is a detailed description of the disclosure provided to aid those skilled in the art in practicing the present disclosure. Those of ordinary skill in the art may make modifications and variations in the embodiments described herein without departing from the spirit or scope of the present disclosure. Unless otherwise defined, all technical and scientific terms used herein have the same meaning as commonly understood by one of ordinary skill in the art to which this disclosure belongs. The terminology used in the description of the disclosure herein is for describing particular embodiments only and is not intended to be limiting of the disclosure.

In one or more embodiments, the present invention is directed a system and/or method that uses two unique and random codes based on cryptographic blockchain key pairs to represent both a physical asset (private code) and the digital or virtual asset (public code) as a token. This system permits all subsequent data generated by the movement, use, manipulation, and exchange of the asset during its whole lifecycle can be trust-linked (forwards and backwards) using either the tokenized digital version or the physical version of an asset, independently, and from *the SAME trust-chain of data recorded on blockchains,* as described below. These codes are initially recoded and associated to assets by a known trusted authority. All subsequent data is generated by the movement, use, manipulation, and exchange of the asset during its whole lifecycle can, therefore, be trust-linked (forwards and backwards) using either the tokenized digital version or the physical version. Importantly, each piece of data may be trust-linked independently from the SAME trust-chain of data recorded on blockchains. This provides not only trusted data to interested parties, but also confirms the authenticity of the physical asset and provides a complete history of its activities.

The following terms may have meanings ascribed to them below, unless specified otherwise. As used herein, the terms "comprising" "to comprise" and the like do not exclude the presence of further elements or steps in addition to those listed in a claim. Similarly, the terms "a", "an" or "the" before an element or feature does not exclude the presence of a plurality of these elements or features, unless the context clearly dictates otherwise.

Unless specifically stated or obvious from context, as used herein, the term "about" is understood as within a range of normal tolerance in the art, for example within 2 standard deviations of the mean. In various embodiments, "about" can be understood as within 10%, 9%, 8%, 7%, 6%, 5%, 4%, 3%, 2%, 1%, 0.5%, 0.1%, 0.05%, or 0.01% of the stated value. Unless otherwise clear from context, all numerical values provided herein in the specification and the claim can be modified by the term "about."

It should be also understood that the ranges provided herein are a shorthand for all of the values within the range and, further, that the individual range values presented herein can be combined to form additional non-disclosed ranges. For example, a range of 1 to 50 is understood to include any number, combination of numbers, or sub-range from the group consisting 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50.

The terms *"smart contract"* and *"digital smart contract"* are used herein interchangeably to refer to a program executed on a blockchain platform having the ability to execute scripts, i.e., programming language that supports programs written for a run-time environment that automates the execution of tasks.

Further, unless otherwise indicated, the word *"token" or "NFT"* refers to a fungible or non-fungible token (NFT) generated under the ERC-721 and/or ERC1155 token standard on the Ethereum blockchain or a comparable token or NFT generated using comparable blockchain software. As will be understood by those of skill in the art, a token is created by writing a piece of code in a smart contract programming language like Solidity that follows the same basic template or base code. Similarly, the term *"tokenization"* refers to the use of an NFT to represent a physical asset as a "proof of ownership.".

As used herein, the word *"Trust Anchor"* is used to refer to initial cryptographic key pairs that derive the physical and digital asset trusted codes associated to physical assets. Similarly, the word *"trust Anchor authority"* is used herein to refer to a Trusted Authority (i.e. a government, government agency, brand, etc.) that registers the asset key/code pairs on a public blockchain. As follows, the terms "Trust Anchor origin transaction" and "origin transaction" are used herein interchangeably to refer to "origin" transactions that provide the initial anchor point of a category of transactions that follow on the "data" blockchain. Further, as used herein, the word *"origin point"* is used to refer to an initial starting (anchor) point of a trusted chain of data and pool of data in an asset's life cycle.

The word *"Elliptic Curve Digital Signature Algorithm" (ECDSA)* is used herein to refer to blockchain digital signature algorithm used to digitally "sign" data using keys derived from elliptic curve cryptography (ECC). Commercially available software for running an Elliptic Curve Digital Signature Algorithm, includes but is not limited to, Microsoft's MSR Elliptic Curve Cryptography Library.

As used herein, the word *"encoding collision"* is used to refer to situations where converting cryptographic data to shorter user friendly encoded data may cause repeated outcomes (data results already seen). These collisions may be avoided by the addition of additional characters to the encoded result-and the term *"incremental character(s)"* is used herein to refer to additional characters that are added to eliminate encoding collisions.

All publications, patent applications, patents, and other references mentioned herein are expressly incorporated by reference in their entirety, which means that they should be read and considered by the reader as part of this text. That the document, reference, patent application, or patent cited in this text is not repeated in this text is merely for reasons of conciseness. In the case of conflict, the present disclosure, including definitions, will control. All technical and scientific terms used herein have the same meaning, unless otherwise indicated.

Further, any compositions or methods provided herein can be combined with one or more of any of the other compositions and methods provided herein. The fact that given features, elements or components are cited in different dependent claims does not exclude that at least some of these features, elements or components maybe used in combination together.

In a first aspect, the present invention is directed to a system for trust-linking data generated by the movement, use, manipulation, and exchange of a physical and/or virtual asset during a whole lifecycle said one of physical and/or virtual asset using the corresponding tokenized digital version or physical version of a physical and/or virtual asset, independently, and from the same trust-chain of data recorded on various "data" blockchains. In various embodiments, the code pair comprises a private code representing a physical asset and a public code representing a digital or physical asset, and is represented as a fungible or non-fungible token. In these embodiments, fungible or non-fungible token may be created using any conventional blockchain software platform with the ability to form fungible and/or non-fungible tokens.

In some embodiments, the private code and the public code are generated by the steps of: designating a trust anchor authority having a publicly recognized wallet address on a publicly recognized wallet on a public level 2 (L2 can be any public blockchain, side chain, layer 2/3 etc.) anchor codes blockchain running on a computer operably connected to a computer network or combination of linked computer networks running a blockchain platform capable of creating a non-fungible token; directing said trust anchor authority to generate a random private key and saving it to a block of said level 2 anchor codes blockchain running on said blockchain platform as an unassigned code registration; generating a public key from said random private key using a digital signature algorithm (DSA) running on the platform generating a 20 byte public address from said public key, wherein said private key and said public address are together comprise an anchor code pair; generating a private code from said private key using an irreversible hashing algorithm and saving said private code to platform for traceability purposes and generating a public code from said identifying information for an asset and said public address using an irreversible hashing algorithm and saving said public code to public blockchain for data traceability.

In one or more embodiments, a fungible token may be used in place of a non-fungible token, as described above. If a fungible token is used, however, all tokens will share a single common public code.

The method or system of the present invention can be run using any suitable computer network or combination of linked computer networks provided that some or all of the network or linked networks are capable and running a suitable blockchain platform. In various embodiments, the system will preferably be run on one or more computers having at least two virtual computer processing units (2vCPU), 8 GB of RAM and 30GB of storage, used in connection with one or more computer networks. As will be apparent, additional computing power and more RAM will provide better performance. This is in addition to whatever is provided by the network, since Blockchain Infra (Public and private nodes can be hosted by Infra providers, e.g. Kaleido, Alchemy, etc.) as a Service is a preferred approach for any network. Suitable computer networks include, without limitation, peer-to-peer (P2P) networks, closed private networks, public networks, hybrid network(public and private) and may be connected by wire connections or wireless connections through the internet, the cloud, HTTP/HTTPS/HTTP2, Websocket, Messaging Queue or other suitable mechanisms.

A suitable L1 or L2 "data" blockchain platform will be able to generate tokens and is preferably ETHEREUM^{™} (Ethereum Foundation, Zug, Switzerland), which is in common use and publicly available. However, while ETHEREUM^{™} is preferred, tokens can be created/minted on any platform supporting smart contracts and are not limited to Ethereum public blockchains. In various embodiments, the blockchain platform may be ETHEREUM^{™} (Ethereum Foundation, Zug, Switzerland), ETHEREUM^{™} Classic, EOS (block.one, Arlington VA), DFINITY^{™} (DFINITY, Zug, Switzerland), or HYPERLEDGER^{™} (The Linux Foundation, San Francisco, CA). As will be apparent, all of these platforms will have engines and languages for implementing/executing smart contracts, run through the appropriate blockchain middleware. In some embodiments, the blockchain platform is the ETHEREUM^{™} platform. The ETHEREUM^{™} platform is an open-source, public, blockchain-based distributed computing platform and operating system featuring smart contract functionality. In these embodiments, the computer networks will be able to load and run the necessary software for running the Ethereum platform, including the engine ETHEREUM^{™} Virtual Machine (EVM) and the language Solidity, for generation of smart contracts. And as set forth above, other non EVM blockchains can be used as long as they support execution of smart contracts and chain codes.

As set forth above, a token is simply a smart contract or a piece of code written on a blockchain program such as Ethereum, or any similar program, with smart contract capability and is created by writing a piece of code in a smart contract programming language like SOLIDITY^{™}, JAVA^{™}, GO^{™}, or NODE. JS^{™}, that follows the same basic template or base code. As will be understood by those of skill in the art, each of the blockchain platforms identified above will have its own language for drafting smart contracts (i.e. tokens) and these languages are available with the blockchain platforms, and need not be listed here. In various embodiments, tokenizing a tangible asset involves several preliminary steps prior to minting the associated token. As set forth above, these off-chain transactions are generally performed by the asset owner, manufacturer, or authorized representative.

The asset itself typically has a well-defined life cycle and at any point between asset creation and tokenization, an explicitly trusted authority is required to establish a recognized and trusted origin point for the asset. In various embodiments, the trusted authority can, by way of example, be the asset brand manufacturer, third-party trusted authority, or Government authority. In some embodiments, trusted intermediaries like distributors and transporters may also serve as trusted authorities. In one or more embodiments, all the data related to asset creation will require multiple signatures to confirm on the blockchain in order to avoid any malicious or incorrect data.

As will be apparent, the earlier the point in the asset's lifecycle that a trusted origin point can be established, the stronger the tokenized asset's trust chain will be. As set forth above, this explicitly trusted origin point is referred to herein as the Trust Anchor. All subsequent asset related data and token related data and transactions written to a blockchain will chain reference back to the Trust Anchor origin transaction. This provides not only trusted data to interested parties, but also the authenticity of the physical asset and history of its activities. Typically, private code data is generated early in the manufacture stages and the public code data (and tokens) are generated later in the retail stages of an asset. Tokenization can occur at any time, but typically there are numerous physical asset related transactions recorded against the private code before the virtual public code data is available and tokenization required along the asset's lifecycle. Simlarly, the physical assets will often have many transaction records (like manufacturing, logistics, processing, etc.) and all these are attached to the private code. Tokenization generally occurs when products is ready for retail business or consumer ownership

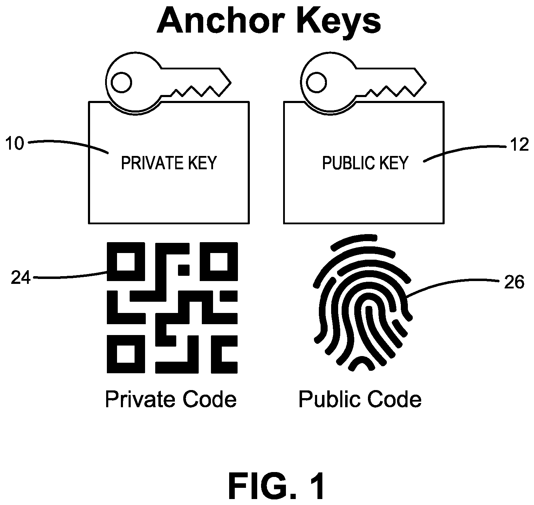

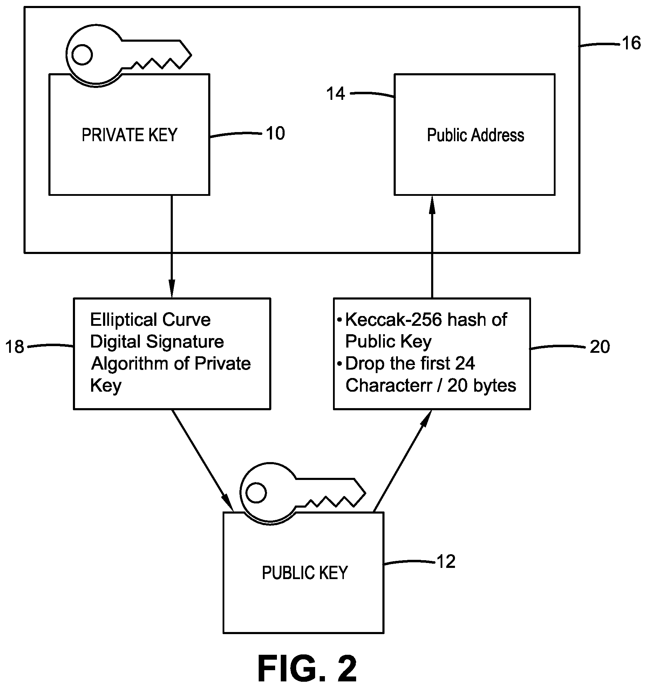

As set forth above, the Trust Anchors are initial cryptographic key pairs (private key and public key) used to derive codes representing the physical and digital asset trusted codes associated to physical assets. (See, FIG. 1). Trust Anchors are represented by a pair of alphanumeric codes that are unique and random and are derived from cryptographic blockchain keys. (see, FIG. 2) Each pair of alphanumeric codes comprises a private code representing the tangible asset and a public code representing the virtual asset that is tokenized. Accordingly, the public and private codes for an asset is referred to herein as an "Anchor code pair" or just "code pair." These anchor code pairs are generated from the key pairs using secure hashing algorithms, as set forth in more detail below. (see, e.g., FIGS. 2, 3A-B, and 4).

As set forth above, the Trust Anchors may, in some embodiments, be generated in batches by the Trust Anchor authority and individually recorded on a public Layer-2 (L2) blockchain (the "anchor blockchain") as asset unassigned codes. In these embodiments, the codes are generated and registered in batches to be used more efficiently in situations where large volumes of codes may be needed, such as in high volume manufacturing activities. In various embodiments, the asset unassigned codes will comprise empty public code records. In these embodiments, the public code will be generated once assets are assigned and, as a result, during the initial phase, many assets may have an empty public code as assets are yet to be tokenized.

As will be appreciated, L1 and L2 blockchains can validate and finalize transactions without the need for another network. And as set forth above, any publicly recognized and trusted authority may be used as the Trusted Anchor authority. In various embodiments the Trusted Anchor authority may be the asset brand manufacturer, a third-party trusted authority, a Government authority or other similar party or organization that is known to be trustworthy. In various embodiments, the recording of the asset unassigned codes on the Anchor blockchain is performed from a publicly recognized wallet address belonging to the Trust Anchor authority.

As set forth above, in many embodiments, the initial step in the method or system of the present invention is to record the codes without any transactions. This first blockchain record recorded in the Anchor blockchain represented by the Anchor public key will contain the origin transaction with the public code and an obfuscated private code of the specific Trust Anchor. As will be described further below, the Anchor code records are referenced by the public code on platforms, and the public key on the blockchain. The public code (being public) is associated to the virtual asset while the private code is associated to the physical asset. The physical asset is, thereby, "protected" and not publicly accessible (except to the eventual owner). As such, private codes are never recorded on the (public) blockchain and only the virtualized/tokenized asset and code are exposed to the public.

Again, in one or more embodiments, these unassigned code registrations are generated in batches to facilitate efficient operation. Trust Anchor transactions are reserved for origin recording of asset transaction categories and are performed by or at the direction of the Trust Anchor authority and are saved to the Anchor blockchain. As set forth above, the initial transaction is the unassigned code registration or "origin transaction" represented by the Anchor public key will contain the origin transaction with the public code and obfuscated private code of the specific Trust Anchor. As will be described further below, the Anchor code records are referenced by the public code.

The next transaction recorded to the anchor blockchain will map one of the unassigned anchor registrations to a tangible physical asset. This transaction will contain basic information regarding the asset and will link back to an initially unassigned code through the anchor blockchain. The information to be entered will, of course, completely depend both upon the nature of the asset and the type of information about the asset most important to the trust authority initiating the transaction. In one or more embodiments, the transaction data may be manually entered by the trust authority in in as much as the data is entered using a process external to the automated RWA assignment process. In some embodiments, the transaction data may be typed in by the trusted authority. In some of these embodiments, the trust authority may confirm that status of the RWA as part of the process.

The starting point for data trust this the Anchor Blockchain records and Anchor codes that are uniquely assigned to a real world asset (RWA). These codes are derived from Blockchain keys that can access a record in the Anchor blockchain. The genesis transactions for a trust chain the very first transaction recoded in an Anchor record dedicated to a specific RWA. This record is the "asset assignment" record which binds an unused Anchor code pair to a RWA. This assignment MUST be done by a trusted authority in the space to establish the start of the RWA's trust chain. Depending on the asset, it may be necessary for the trusted authority to create these transactions themselves using their own crypto keys to digitally sign the transaction.

In one or more embodiments, these transactions will also provide HTML or other links to websites or other computer databases containing additional information regarding the asset. As will be apparent, the nature and trustworthiness of transactions involving the asset occurring prior to its being linked to the initial anchor registration cannot not be tracked or verified by the system. Accordingly, the transaction data preferably contains information about the physical asset as early as possible in its lifecycle.

Once the anchor asset assignment transaction is created, the Anchor record is dedicated to that particular tangible or " real world asset" (RWA), as set forth above. A code pair is then generated and assigned to the RWA, as set forth below, and then recorded on the anchor blockchain as the code pair assignment anchor for that RWA (generally referred to as the "origin transaction" for that RWA).

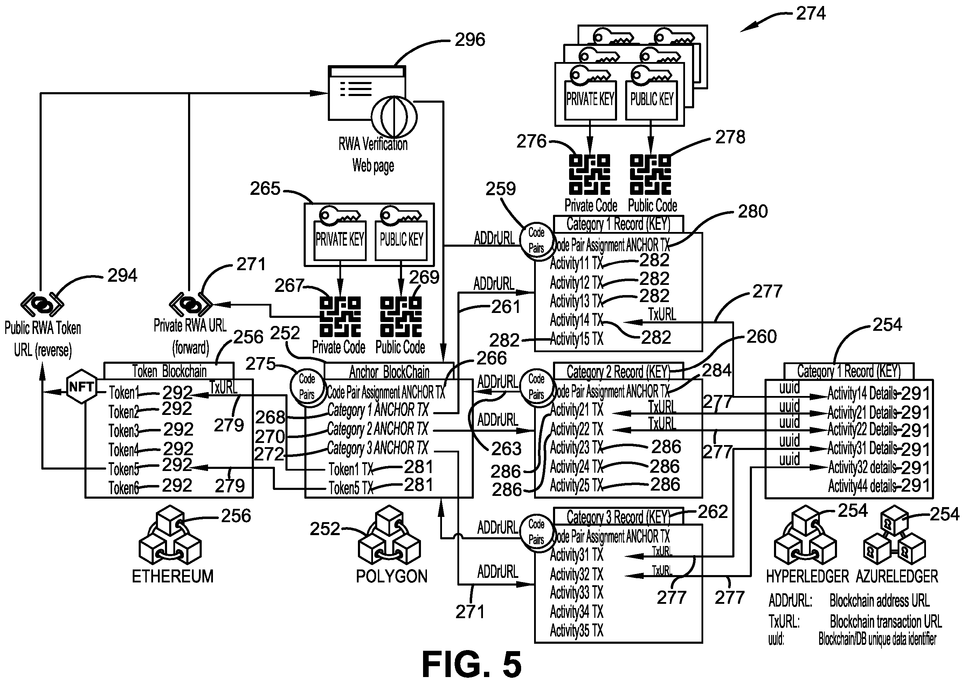

All further activities involving the RWA recorded prior to tokenization are recorded in a specific category record for that activity kept on the Anchor blockchain with origin transaction. Each category of activities will be established for the RWA by a trusted authority, as described above. These specific categories of activities are not particularly limited and will depend upon the tangible asset being used. Suitable categories of activities include, without limitation, logistics, transportation, manufacturing, warehousing and storage, distribution, and retailing. For each category of activities to be tracked, a set of category anchor key pairs are generated by the trusted authority establishing the category being added, from which a code pair is generated for that category record. Accordingly, each category will have its own category origin transaction ("category anchor") which is linked to the origin transaction for the asset via the code pair. All activities in a category related to that RWA can be recorded as activity data and referenced by an anchor transaction for that category set of activities. (See, e.g. FIG. 5).

Details regarding a particular activity may be recoded in a separate blockchain (a "data blockchain") and referenced by the anchor transaction for that category in the anchor blockchain. (See, e.g., FIG. 5) All activities in a category are recorded in the same anchor code record. Each origin category transaction represents the anchor point of that category activities for the asset. The subsequent activity transactions for that category are recoded in the data blockchain linked together and/or linking back to the anchor code transaction. Tokenization (i.e., the minting of a token) is also a category, but the token data (unlike other asset related activity data) is recorded in the token blockchain instead of the data blockchain. (See, FIG. 5)

As set forth above, each of these transactions involves a new code pair, which links back to the origin transaction for the particular category and through the anchor blockchain to the initial origin transaction. In one or more embodiments, the new code pair will be one of the original unassigned code pairs. Each new code pair will be saved to the Anchor blockchain. Collected activity data produced during the lifetime of the asset or token is collected in one or more data secondary blockchains. Information regarding RW As may be collected in either public or private blockchains. Given their nature, however, collected data activity regarding tokens will be collected and saved to one or more public blockchains. The public code for these assets will link to the anchor blockchain.

As set forth above, the system begins by randomly generating the private key, as set forth above. In various embodiments, the Private key will be 64 hex characters in length, depending upon the requirements of the blockchain platform being used. In some embodiments, the private key is 64 hex characters in length and has a corresponding size of 32 bytes to avoid collisions during hashing, but the invention is not to be so limited and any suitable private key may be used. As will be understood, the length of the private key will ordinarily depend upon the blockchain platform being used. In some embodiments, the private key will be an alphanumeric cryptographic key about 64 hex characters in length and a size of from about 32 bytes.

In some embodiments, the trust anchor authority generates a random private key comprising from 64 hex characters (32 bytes) and saves it to a block of level 2 (the L2 can be any public blockchain, side chain, layer 2/3 etc.) anchor codes blockchain running on said blockchain platform as an unassigned code registration; generating a public key from said random private key using a digital signature algorithm (DSA) running on a/said platform generating a 20 byte public address from said public key by first generating a 32 byte hash value for said cryptographic public key and then removing the first 12 bytes to produce said 20 byte public address, wherein said private key and said public address are together comprise an anchor code pair; generating a private code from said private key using an irreversible hashing algorithm and saving said private code to platform for traceability purposes and generating a public code from said identifying information for an asset and said public address using an irreversible hashing algorithm and saving said public code to public blockchain for data traceability.

In various embodiments, the ECC key pairs method/system of the present invention will use hierarchical and deterministic keys, as is known in the art. The keys are "deterministic" in the sense that the public keys are not created randomly, but instead generated as part of a linked chain. Accordingly, regular backups are not required so long as the private key that created the chain is safe. This simplifies key management and even allows for easy caching of the Private key in a paper wallet or cold storage with only child keys stored on more vulnerable computer hardware. Similarly, the keys are "hierarchical" in that the that lower-rank keys (i.e. the public keys) cannot reveal information about the higher-ranked private keys, allowing for selective sharing of public keys for auditing and trust chaining purposes.

The Private Key may be generated using any suitable method known in the art for that purpose, including, but not limited to, a Rivest-Shamir-Adleman (RSA) algorithm, elliptic curve cryptography (ECC), or a digital signature algorithm (DSA). As will be understood by those of skill in the art, the private and public keys are generated as per blockchain requirements. One of ordinary skill in the art will be able to generate the Private Key without undue experimentation. The private key need not be stored on the blockchain and is generally kept by the Trust Anchor authority. In some embodiments, the Private Key is generated using elliptic curve cryptography (ECC). One of ordinary skill in the art will be able to generate a suitable private key without undue experimentation.

As can be seen in FIG. 2, the private key 10 is then used to generate the public key 12 and the public address 14. As will be apparent, public address 14 is a shortened version of the public key 12. The private key 10 and public address 14 (or public key 12) together form a key pair 16 that acts as the base trust anchor for each asset/product. Key pairs are used for blockchain operations and form the bases of the trust anchor codes, described below. In the embodiments shown in FIG. 2, the public key 12 is derived from the private key 10 using Elliptic Curve Digital Signature Algorithm as shown in block 18, but the invention is not to be so limited and any mechanism for deriving the private key that is compatible with the blockchain software may be used. In various embodiments, public key 12 is derived from the private key 10 using a Digital Signature Algorithm (DSA), an RSA algorithm or Elliptic Curve Digital Signature Algorithm (ECDSA), as seen in FIG. 2. In the one or more embodiments, the public key 12 will be 128 hex characters in length and have a size of 64 bytes.

As can be seen in block 20 of FIG. 2, Public Key 12 is then hashed and shortened to 40 characters (20 bytes) to form Public Address 14. The Public key may be hashed using any suitable hashing algorithm known in the art for that purpose that is capable of producing irreversible hash values. Further, the hashing algorithm is preferably at least a 256 bit hashing algorithm as anything less will have a high chance of hash collision with advanced computing power. In various embodiments, the hashing algorithm used to form the private code will scramble and alter the public key irreversibly, such that it is essentially impossible to deduce the Public key (input) from the public Address code (output). Suitable irreversible hashing algorithms, may include, without limitation, Keccak-256, sha256, or other irreversible hashing algorithms of suitable size. In one or more embodiments, the private code will be operated using an algorithm meting the secure hash algorithm (sha) standards 2 or 3, but more advanced hashing algorithms (such as those meeting the secure hash algorithm (sha) standard 5, or greater) may be used as security needs evolve. In some embodiments, the hashing algorithm used to form the private code will be operated using the secure hash algorithm (sha) 3 standards issued as part of Ethash consensus engine software package sold by ETHEREUM^{™} (Ethereum Foundation, Zug, Switzerland), which is publicly available. One of ordinary skill in the art will be able to select a suitable hashing algorithm for generating the public address 14 without undue experimentation. As will be apparent, the hashing itself is not Blockchain dependent.

In the embodiment shown in FIG. 2, the Public Key is first run through a Keccak-256 hashing algorithm to generate a Keccak-256 hash of the public key, which will be used to form the Public Address. As will be appreciated by those of skill in the art, the Keccak-256 hashing algorithm has 256 bytes memory and will return a string 32 bytes in length. Next, the first 24 characters (12 bytes) of the Keccak-256 hash of the public key are removed to produce a 40 character long (20 bytes) Public Address prefixed by 0x, consistent with most blockchain standards.

As set forth above, the first blockchain record represented by the Anchor public key will contain the origin transaction with the public code and obfuscated private code of the specific Trust Anchor. The Anchor code records are referenced by the public code on platforms, and by the public key on the blockchain. The public code (being public) is associated to the virtual asset while the private code is associated to the physical asset. The physical asset is, thereby, "protected" and not publicly accessible (except to the eventual owner). As such, private codes are never recorded on the (public) blockchain, and only the tokenized asset and public codes are exposed to the public.

In one or more embodiments, the key pairs are formed by: creating a random private key having a length of 64 hex characters and a size of 32 bytes; deriving a public key having a length of 128 hex characters and a size of 64 bytes from the private key using an Elliptic Curve Digital Signature Algorithm; running the public key through a Keccak-256 hashing algorithm to obtain a Keccak-256 hash of the public key and then dropping the first 24 characters (12 bytes) of the Keccak-256 hash to produce a public address that is 40 characters long, 20 bytes in size, and has the prefix 0x., wherein said private key and public address form a key pair that acts as the base trust anchor for each asset or product. (See FIG. 2).

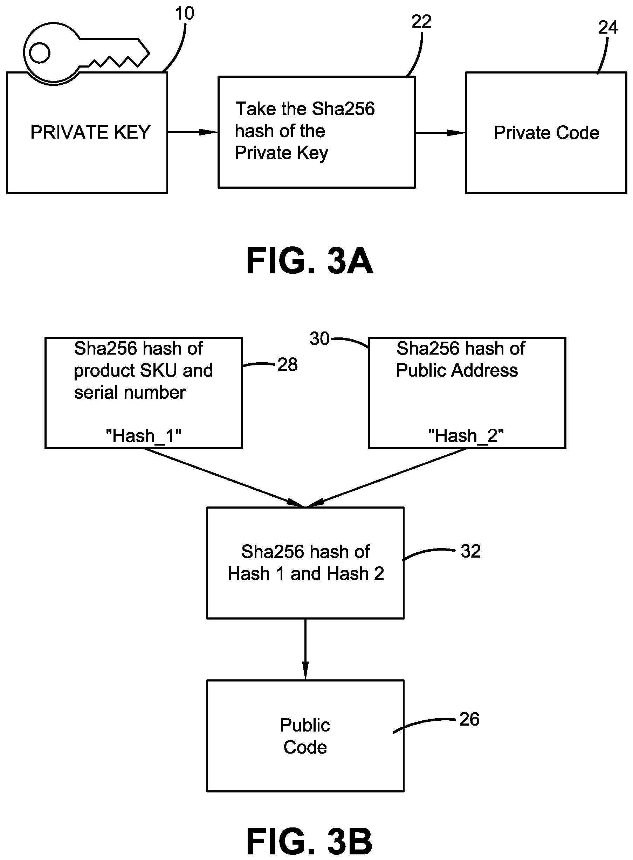

The key pairs described above are used for blockchain operations and form the bases of the public code and private code (together, the "trust anchor codes" or a "code pair"). In various embodiments, the private code is an irreversible hash function of the private key. (see, FIG. 3A) Any suitable irreversible hashing algorithm known in the art to be blockchain compatible may be used to hash the private key to form the private code, provided that a sufficiently long bit strength is used. In various embodiments, the hashing algorithm used to form the private code will scramble and alter the private key irreversibly, such that it is essentially impossible to deduce the private key (input) from the private code (output). Suitable hashing algorithms for forming the private code may include, without limitation, sha256, Keccak-256, or other irreversible hashing algorithms of suitable size. In one or more embodiments, the private code will be operated using an algorithm meting the secure hash algorithm (sha) standard 2 or standard 3, but more advanced hashing algorithms (such as those meeting the secure hash algorithm (sha) standard 5, or greater) may be used as security needs evolve. In some embodiments, the hashing algorithm used to form the private code will be operated using the secure hash algorithm (sha) 3 standards issued as part of Ethash consensus engine software package sold by ETHEREUM^{™} (Ethereum Foundation, Zug, Switzerland), and is publicly available. In some embodiments, the hashing algorithm used to form the private code will be operate using the sha-2 standards. The sha-2 standards were first published by the National Institute of Standards and Technology (NIST) as a U.S. federal standard and has been released the patent under a royalty-free license and are publicly available. In various embodiments, one of ordinary skill in the art will be able to select a suitable hashing algorithm for forming the private code without undue experimentation.

In one or more embodiments, the private code is generated by hashing the private key as shown in FIG. 3A. In the embodiment shown in FIG. 3A, the private key 10 is hashed using a sha256 hashing algorithm as shown in block 24, to form public code 22. As will be understood by those of skill in the art, the sha256 hashing algorithm is an irreversible hashing algorithm. Again, other irreversible hashing algorithms of suitable size including, without limitation, sha256 and Keccak-256, may be used. But, as will be understood by those of skill in the art, the hashing algorithms suitable for use will evolve as security practices and technology improve. For example, sha2 hashing algorithms are currently sufficient, if minimally so, but it is anticipated that the invention will move to sha5 hashing algorithms as security and technology evolve.

Turning to FIG 3B, the public code 26 is created by combining and then hashing information regarding the product (asset) or item ("Hash_1") 28 and the public address ("Hash_2") 30. In the embodiment shown in FIG. 3B, the stock-keeping unit (SKU) and serial number for the product, item or other asset are combined and run through a sha265 hashing algorithm in block 28 to produce a first hash ("Hash_1") 28. In the embodiment in FIG. 3B, the product information used to form Hash_1 28 is the SKU and serial number for the asset, but the invention is not so limited and any information from which the product, item or other asset in question can be uniquely identified could be used. The second hash, Hash_2 30, is formed by running the public address 14 through a sha265 or other appropriate hashing algorithm as in in block 28 of FIG. 3B. Finally, Hash_1 28 and Hash_2 30 are concatenated and then run through a sha265 hashing algorithm as in block 32 of FIG. 3B to produce Public Code 26. The linking is done to represent the RWA as a unique identity on blockchain.

In some embodiments, the public code 26 may be shortened or modified for ease of use. In some embodiments, for example, the public code 26 used in more user friendly formats (like in URLs). In embodiments where the public code 26 is to be used in a URL, for example, the base62 encoding of the public code is used taking only the first characters (generally 6-10 characters) for manageable URL lengths. In these embodiments, the number of characters is not particularly limited but must be unique and is preferably short enough as to be end-user friendly. However due to possibility of collision, additional characters can be added until its sequence is unique. The goal in usability is to reduce the length of the code while maintaining its uniqueness. In the case of collisions, additional characters of the full public code are used in the shorter user friendly format Similarly, in the case of encoding collision, incremental characters may be added from the base62 result until the collision is resolved.

As set forth above, the Key pairs are used for blockchain operations and to form the bases of the trust anchor codes. In some embodiments, the trust anchor codes for an asset may be formed by: generating a key pair (private key and public address) as set forth above; generating the private code by calculating a sha256 hash of the private key; calculating the sha256 hash of the asset's external SKU and serial number (Hash_1) and concatenating them; calculating the sha256 hash of the public address; and calculating the sha256 hash of Hash_1 and Hash_2 to generate the asset's Public code. (See, FIGS. 3A and 3B).

In various embodiments, each Anchor origin transaction based on a participating entity (information owners) will contain a data structure referencing asset information related to the category of the activity and will link to one or more secondary public and/or private websites and blockchain URLs of related asset and token information. That is, in some embodiments, the public code is the link to the unique physical/virtual asset identification on a public blockchain, which supports message storage. For example, the following public key and public code may be generated from a private key as set forth above and shown in FIG. 2.
a. Public Key: 0xB595C1783427C33b024388519EaA02Aa37f8C25d
b. Public Code:
   b0b10a8dc3dc18fbd7e04439a6614f20500cafe0la4a5574b6be432beffd7f41 Using this public key, asset information can be found on secondary blockchains. Exemplary, public key usage is illustrated in FIGS. 8B and 8C.

Further, it should be noted that tangible asset category transactions should be separate from the token category transactions. In one or more embodiments, these transactions may be accessed through the Public address, as described above. Depending on the origin anchor point of an asset, many tangible asset category origin transactions can exist before the asset is tokenized. As can be seen, the earlier in an RWA lifecycle that the anchor codes can be assigned, the longer and stronger the data trust chain will be. Between anchor assignment and tokenization many categories of asset transactions each with many activities can be recorded to establish this strong trust chain prior to tokenization providing added intrinsic value to the RWA token. The better the history of an asset is understood, the better the level of trust. Transaction data structures can contain numerous data elements but different data category data should be recorded in its own transactions. For example:
Address: **0xB595C1783427C33b024388519EaA02Aa37f8C25d**
Transaction: Asset Transfer
Transaction Hash:
   0x91a4297bf61a8ece71319a687a16967160d394a8930e895ed2b7fa04a362c31c
   Block: 4067259410065408
   Timestamp: 256 days 9 hrs ago (Mar-23-2023 11:26:33 AM +UTC)
   From:0x3Dc642744c07F012774c84F743D4D1AE2A35E7A4
   To:0xB195C1783437C33b024308519EaA02Aa37f8D23d
Transaction: NFT Mint
Transaction Hash:
   0x91a4297bf61a8ece71319a687a16967160d394a8930e895ed2b7fa04a362c31c
   Block: 4067259410065408
   Timestamp: 232 days 2 hrs ago (Mar-23-2023 11:26:33 AM +UTC)
   From:0x3Dc642744c07F012774c84F743D4D1AE2A35E7A4
   To:0xB195C1783437C33b024308519EaA02Aa37f8D23d

In one or more embodiments, the transaction data is manually entered by a trust authority, as set forth above.

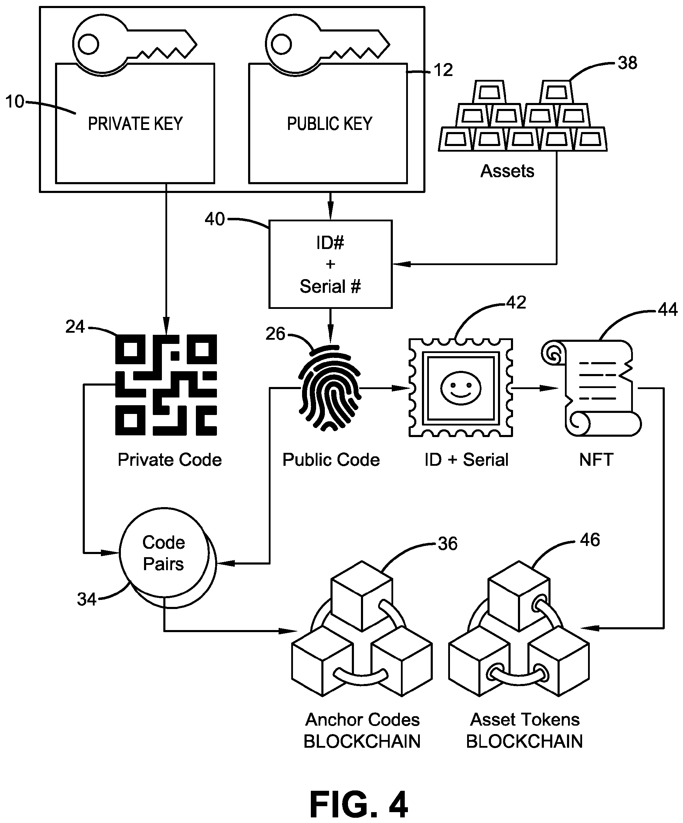

In some embodiments, the system/method of the present invention may operate, in part, as shown in FIG. 4. In these embodiments, the private key 10 is used to generate the private code 24 and the public key 12 is combined with the defining information (ID# + Serial#) 40 of asset 38 to generate the public code 26, as can be seen. Together, private code 24 and public code 26 are referred to as a code pair 34.In various embodiments, each code pair is saved in the Anchors Code blockchain 36. The private code 24 is used to tokenize the asset to generate one or more NFTs 44 which are saved in one or more asset tokens blockchains 46. In some embodiments, the asset 38 may be divided into numerous discrete assets when tokenized thereby generating numerous tokens linked to the original asset 38. In these embodiments, information identifying the specific portion of the original asset 42 is part of the public code when each of the NFTs is minted. As set forth above, blockchain key pairs are unique and random technical data elements used for Blockchain activities and the anchor code pairs are derived from the key pairs and used for public user reference codes to identify the RWA and the virtual (tokenized) asset. Sometimes a one or more relationships are required for the public (Key/Code) side when multiple tokens are minted all relating to one RWA (and one assigned private key/code). This derivation leverages RWA IDs and or serial numbers to establish one or more relationships.

In some embodiments, the system/method of the present invention may operate, in part, as shown in may be as shown in FIG. 5. FIG. 5 shows the operation of the anchor blockchain 252, with its various anchor transactions, the data blockchain 254 for bulk data storage (details), category activity records 258, 260, 262 and a token blockchain 256 for the token data 292.

In FIG. 5, the RWA anchor key pair 265 is used to generate anchor code pair 259 saved to the anchor blockchain 252 as "CodePair Assignment ANCHOR TX" 266 and includes private code 267 and public code 269. Private code 267 is also linked to Private RWA URL 271. In addition to "CodePair Assignment ANCHOR TX" 266, anchor blockchain 252 contains anchor tranactions for three asset categories, namely "Category1 Anchor TX" 268, "Category2 Anchor TX" 270, and "Category3 Anchor TX" 272, each generated via a private code 276 and a public code 278 generated from a category anchor set up by a trusted authority, as set forth above. Suitable activity categories include, but are not limited to, logistics and supply chain management, warehousing and storage, manufacturing or asset transformations and retailing. In one or more embodiments, the asset category data may be manually entered as metadata by the user. As can be seen, "Category1 Anchor TX" 268 is linked to "CodePair Assignment ANCHOR TX" 280 in Category1 Record (Key) 258 via blockchain address URL 261, "Category2 Anchor TX" 270 is linked to "CodePair Assignment ANCHOR TX" 284 in Category2 Record (Key) 260 via blockchain address URL 263, and "Category3 Anchor TX" 272 is linked to "CodePair Assignment ANCHOR TX" 288 in Category3 Record (Key) 262 via blockchain address URL 273. Category1 record 258, Category2 record 260, and Category3 record 262 are recoded on the anchor blockchain 252 against the same Code Pair 275. As set forth above, each activity category, will have a corresponding category anchor key pair 274, generating private codes 276 and public codes 278.

As can be seen, data regarding activities 11-15 282 are saved in Category1 Record (Key) 258, data regarding activities 21-25 286 are saved in Category2 Record (Key) 260, and data regarding activities 31-35 290 are saved in Category3 Record (Key) 262. Additional data for each activity may be saved to data blockchain 254. The details 291 of activities 282, 286, and 290 are stored on data blockchain 254 and linked to activities 282, 286, and 290 by blockchain or other database unique data identifier 277.

When a new token of a RWA is minted, an entry 281 is made in the anchor blockchain record for the code pair of that asset and saved to the Token blockchain 256 via blockchain transaction URL 279. Each token 292 will point to Private RWA URL 271 and each private code 267 will point to a Public RWA Token URL 294. In the embodiments shown in FIG. 5, Private RWA URL 271 and Public RWA Token URL 294 are links to a RWA Verification Webpage 296 containing metadata and other information for each asset. RWA Verification Webpage 296 further links to the Anchor blockchain 252.

In FIG. 5, Category 1 Record 258 contains CodePair Assignment ANCHOR TX 280 and activities 282; Category 2 Record 260 contains CodePair Assignment ANCHOR TX 280 and activities 286; and Category 3 Record 262 contains CodePair Assignment ANCHOR TX 288 and activities 290. In these embodiments, tokens 292 are saved to token blockchain 256. And as can be seen, token blockchain 256 is also linked to Public RWA Token URL 294. Finally, Private RWA URL 271 Public RWA Token URL 294 both link to RWA Verification webpage 296.

### Tangible asset (RWA) transaction data structure

In various embodiments, the tangible asset transaction data structure will include, without limitation, the Anchor code (public code) Product Verification URL, and Product NFT URL. As will be apparent, the anchor code will be the public code, as described above. The Product Verification URL will point (i.e. link) to a platform showing user friendly information of both primary and secondary blockchain details and will redirect the user to a portal to the platform using the URL. In some of these embodiments, the Product Verification URL may be copied and pasted into a browser. In various embodiments, the platform displays all the information of both primary and secondary blockchain details necessary to verify the authenticity of the product . In various embodiments, a product unique "public code" registered on the blockchain can be found with owner details. In some embodiments, the Product NFT URL will be a hyperlink to a blockchain explorer, such as https://etherscan.io, with the exact transaction identification number (transaction id) where data is written on the blockchain. (See, e.g., FIG. 8D). Blockchain explorer will display all the information about each block including the content in the transactions, including, but not limited to information regarding minting and transfer of tokens (i.e., token id, contract minted, owners, blockchain details related to the NFT, etc.)

In some of these embodiments, the RWA transaction data structure may comprise the following:
a. AnchorCode:
   (e.g., b0b10a8dc3dc18fbd7e04439a6614f20500cafe01a4a5574b6be432beffd7f41)
b. Product Verification URL:
   (e.g., https://verify.somedomain.com/MnRYEQD)
c. Product NFT URL: (e.g.,https://etherscan.io/tx/0xb56610292f63d97ef13b8fe862
   a9645e19d06f0e6d02318639edf4f33ffad3e)
(See, FIGS. 8C, 9B). As set forth above, the Product Verification URL points to one or more platform showing user friendly information including both primary and secondary blockchain details. As used herein, the term "primary blockchain" refers the Anchor blockchain, and the term "secondary blockchain" is used to refer to all other blockchains (e.g., token and data blockchains). It will redirect to a platform via a URL or other similar means to display all the information necessary to verify the authenticity of the product, and will display both primary and secondary blockchain details. In various embodiments, a unique product ID is the actual public code registered on Anchor code blockchain and can be found on a customer friendly user interface with the owner details. The Product NFT URL will redirect to a portal through a customer friendly user interface (such as, a marketplace website) to display all the information (including both off-chain data and on-chain data) including the content in the transaction, including and information regarding minting/transfer (token id, contract minted, owners, blockchain details related to the NFT, etc.). The on-chain data is, of course, stored in a block on a blockchain and will include, for example, transaction IDs, the block number, timestamps, NFT IDs etc. In one or more embodiments, other asset or transaction specific data may be manually entered by the user.

### Tokenized asset transaction data structure

In various embodiments, all tokenized assets will be described in a data structure with key/value pairs that describe the asset's description, attributes, characteristics and values. For example, a tokenized data structure for a bottle of whisky may be as follows:

```
 {
 "selling_price": "2600.00",
 "description": "PRODUCER are a luxury travel company based in Scotland with high level
 privileged access to the whisky industry.......... https://verify.WEBSITE.com/D37ToIb",
 "storageLocation": "London City Bond",
 "productName": "BRAND 30 Year Old, Vol. 1",
 "bottle_id": "",
 "external_url": "https://www. WEBSITE.com",
 "public_code": "8597316d1b1de76e490dec9d700583287ad7caf06b23cdffbccc9ce03884135c,
 "finish": "Creamy,Sichuan Pepper,Warm",
 "tag": "",
 "sku": "B01w8",
 "orignal_price": "",
 "productType": "Bottle",
 "nose": "Butterscotch, Cantaloupe Melons, Orange Zest,Ripe Pears",
 "serialNumber": "095",
 "singleCask": "YES",
 "name": "BRAND 30 Year Old, Vol. 1 - No.095",
 "palate": "Toffee,Vanilla Fudge",
 "attributes": [
  {
   "trait_type": "Brand",
   "value": "BRAND"
  },
 ],
 "royaltyPercentage": 5,
 "royaltyReceiver": "0x336D5b3A5Db865f64DEAe96668044fe3EdBC1025",
 "image":
 "https://ipfs.io/ipfs/AmfRyDCAWbUm7kmEjpEFoePeUzGEDmb1kwBkEw9R4cq58D"
 }
```

In various embodiments, the asset or transaction specific data may be manually entered by the trust authority, as set forth above.

All category transactions are single entries against an anchor code pair that represents the physical and digital versions of the asset through its lifecycle. All asset related data activity pools are securely captured in "trust chain linked" associated systems such as ERPs, data repositories and secondary blockchains (private or public). In various embodiments, asset related data activity pools will comprise of categories include, without limitation, mining, manufacturing, production, storage, delivery and various product lifecycle categories and will, of course, depend on product type. (See, FIG. 5) As can be seen, the minimum transactions in an anchor blockchain record are the RWA assignment transaction and the tokenization transaction. If more RWA transactions are to be recorded, the corresponding activity category is defined and the initial anchor transaction of that category of activity is recoded typically between the assignment and tokenization activity in chronological order to mirror what is occurring to the RWA in the real world. These categories, the activity data and metadata are all definable and agnostic to the solution. As can be seen, the anchor category records have their own anchor codes and trusted authorities. This granular anchor code record and relationship mapping can create complex 2D data structures which can be traversed backwards and forwards, up and down to independently access all RWA related data along the trust chain in the life cycle of a RWA.

### Secondary reference data repositories and websites

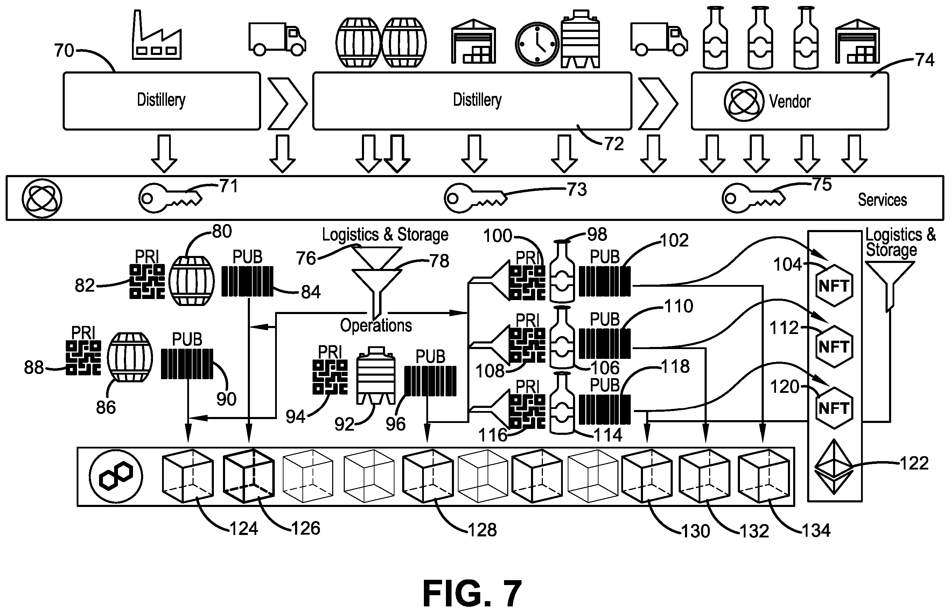

In one more embodiment, the system or method will further comprise one or more secondary reference data repository and/or website. In one or more embodiments, the Product Verification URL will redirect to manufacturer or brand site to display all the asset information in a consumer-friendly layout. These data repositories are not particularly limited provided that they are publicly available and accessible from the Product Verification URL. In some embodiments these data repositories may be part of a distributed ledger or website hosted as part of a platform setup on cloud or on-premise setup, and not on a blockchain. In certain embodiments, a product unique "Anchor code" registered on a secondary blockchain can be found with the current owner wallet address. (See, FIGS. 7, 8A-E, 9B-D).

As set forth above, the anchor blockchain contains only the initial Anchor and tokenization transactions. (see, FIG. 5). Accordingly, additional category related activity information are recoded on the data blockchain and related and linked data repositories.

### Secondary blockchain reference data

Secondary blockchain reference data is stored on middleware (orchestration layer) on any data blockchain and will have the same data structure as the tokenized asset data structure to make the data structures compatible on multiple blockchains. In some embodiments, the same structures can be achieved by using smart contracts to make the data portable on any blockchain network, as is known in the art. As will be apparent, token data structures are preferably kept common for maximum reusability across various supported blockchains. As will be appreciated by those of skill in the art, Tokenized asset (NFT) metadata is preferably kept using certain standard naming conventions, so that marketplaces, such as https://opensea.io, https://rarible.com, or https://mintable.com, can render the asset metadata (e.g traits/attributes, animation URLs, etc.) automatically without any structure changes. In some embodiments, the tokenized asset data structure is kept using a marketplace (such as opensea) metadata standards, so that portability from platform is easier.

### Personal Identifiable data compliance

In various embodiments, RSA encryption will be used to protect personal identifiable information (PII) data (i.e., name, phone number, email, address, etc.) on public networks. To protect PII data, an AES key is generated to encrypt the sensitive data such as the owner and location details. Below is a sample data structure which must be encrypted.

```
 "owner": {
  "name":"",
  "phoneNumber":"",
  "email":""
 },
 "location": {
  "address":"",
  "city":"",
  "country":"",
  "zipcode":"",
  "region":
 }
```

### Protected data

The remaining (non-sensitive) related personal data in the data structure described above, can remain in plain text. The PII AES key is encrypted with the anchor public key and included in the data structure along with the protected PII data.

```
 "encryptedDetails" :
 "U2FsdGVkX19Fgtzx3I42n53CPeHjM/Icir6FeUlv/XoQPKkKRMFFj/ZFbIx5WTQt+S6pT/wxh
 /wBq2B+aVgoOMYZX3JNwzIfWiQeuzDAGPviLc7jniZRPq6WBOxoRre509w3ts7m4QXCFu5
 tRFTcPDpSJvBJ+/9jJKcB3yZTyxYWdd5o2DLr8EIUluhwD92qlNWJ9TONJrm+IMpWYmOrC
 KW/92ujnY9GQzekaudV33sv+Ypv/rnPdcBOcOZUO4hRy05hPAojyR2rxES7/GnhCgbZT+qX+
 5h5p8XxsZa66ILS9S+Fz7j7Vd/gUFtB3eS1DA4EAoDCSIpP97aZg45Fd5t+f34kXyxdFieI0mxN
 GW4g+T1D2nEi11 Y7Q3JF2LK6v+MtBDxrSNSpMvbca7To88WnkTDjypzEWTAmMhOFFImDz;
 6zlU7k2ZTadrQ0pLfQ2a",
 "privateCodeUrl": "https://verify.nft-portal-uat.imshktech.com/COghk",
 "shipmentTime": "2023-09-21 12:03:46",
 "burnTime": "2023-09-21 12:03:46",
 "walletAddress": "0x2C834E3e3565BD2EBef17447aeB81586ee9851bD",
 "custId": "bb7afce3-7f3e-44d6-9f9c-415a47c942eb",
 "key" :
 "guBggdKgkhiFVRYXbT9KROXFhWGnJnsSMfilKqKamwg5xEHv3rVAGupGCDKzPAOEJ
 KEAcoIqoZO+gLmmOrBNMB3QHP6g6fSafsZ9pIRCWeNIT/AqOYBhXlzRS5QFacI7IJ71kJfg
 1nMQmfm8YTL0Mj+I7wggqZ45JCucD9QNk8PvSxkV+oJ2P4bNF9pjZlSfDu920Vn4nvHjAe
 YOPnF/Tiisrp1K915g213H/dxb+bAIbg+X+nrX3o4RZKPX7nCRts1Hnzwcc6bqxpuUsIhCBYyR
 4O/I0wtxyuZc6kteCnlEEJRI+VtCC5Sqkyxi1YxTP+18cQLGNsvUegnQC60Tw=="
```

### Trust chaining

As will be apparent, the system or method of the present invention permits a user to confirm the trust chain in both the forward and reverse directions independently, and from the *SAME* trust-chain of data recorded on various blockchains. As used herein, confirming links in a trust chain moving forward in time is referred to herein as trust-chaining in a forward direction and conversely, confirming links in a trust chain moving forward in time is referred to herein as trust-chaining in a reverse direction. FIG. 5 shows how RWA transactions and their related data are recorded and how the various transactions and blockchain records are linked to facilitate two way traversals in order to follow RWA transactions and activities in both forward and reverse directions.

### A. Forward data trust chaining

In various embodiments, the present invention is directed to a method of forward data trust-chaining. Access to the anchor record of a RWA begins from the RWA itself using the private code, or by the token public code, or link to a host page for the tokenized RWA. Once the anchor record or transaction is accessed all related data available can be traversed in any direction within and between blockchains using the system described above.

In one or more embodiments, the trust chain may be forward traversed as shown in FIG. 5. In some of these embodiments, the trust chain may be forward traversed starting from the physical asset's Private Code 267 as follows: scanning a physical asset's Private code 267 from any front-end mobile app or web application into the scanned call of the backend API (not shown); fetching the paired Public Code 269 from the backend API and, using the public key 265, retrieving information from blockchain 252; going to the Private RWA URL 271 and following it forward to RWA Verification Webpage 296 using the metadata of the asset details; accessing the blockchain metadata to confirm authenticity of the product.

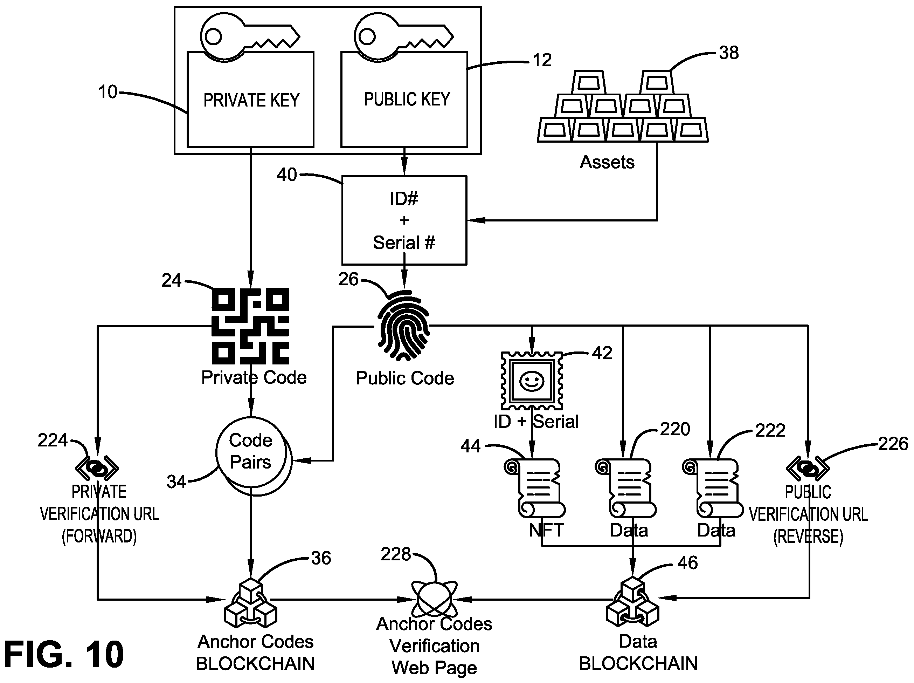

In one or more embodiments, the trust chain may be forward traversed as shown in FIG. 10. In some of these embodiments, the trust chain may be forward traversed starting from the physical asset's Private Code 24 as follows: scanning a physical asset's Private code 24 from any front-end mobile app or web application into the scanned call of the backend API (not shown); fetching the paired Public Code 26 from the backend API and, using the public key 12, retrieving information from blockchain 36; going to the Private Verification URL 224 and following it forward to product web site 228 using the metadata of the asset details; accessing the anchor code and owner detail claims which are available in consumer-friendly presentation on the product web site linked thereto; following the Anchor code URL to the blockchain transaction which contains product transaction details and secondary blockchain 46 transaction URL; and cross matching the details the product and token on consumer site (asset metadata) and blockchain to confirm authenticity of the product.

### B. Reverse data trust chaining

In a second aspect, the present invention is directed to a method of reverse data trust-chaining using the system described above.

In one or more embodiments, the trust chain may be reverse traversed as shown in FIG. 5. In these embodiments, it is possible to review and confirm authenticity, ownership, etc. working back from a token to the blockchains. In some of these embodiments, the reverse trust chaining process begins by accessing the Private RWA Token URL 294 via a public code available on a consumer site or in the metadata for a Token 292, and using the Private RWA Token URL 294 to access the RWA Verification Web Page 296 and from there the blockchains.

In some other embodiments, the trust chain may be traversed in the reverse direction to confirm authenticity as shown in FIG. 10. Starting from the virtual asset's Public Code 26, the trust chain may be traversed in the reverse direction by: accessing the virtual asset's Public Code 26 on a consumer site or in a token metadata, said consumer site comprising links to a Verification URL 226 and an anchor code URL 228 stored on a secondary blockchain 46 (the virtual asset's Public Code 26 will be stored and accessible from the consumer site or the token metadata); following the Verification URL 226 backward to a product website comprising an a public anchor code 26 and owner details; following the anchor code URL to blockchain transaction contains product transaction details and secondary blockchain transaction URL; and cross matching the tangible asset transaction data structure details for the product on the consumer site 228 and the token on the blockchain.

### Aggregating and Dividing Assets and Codes

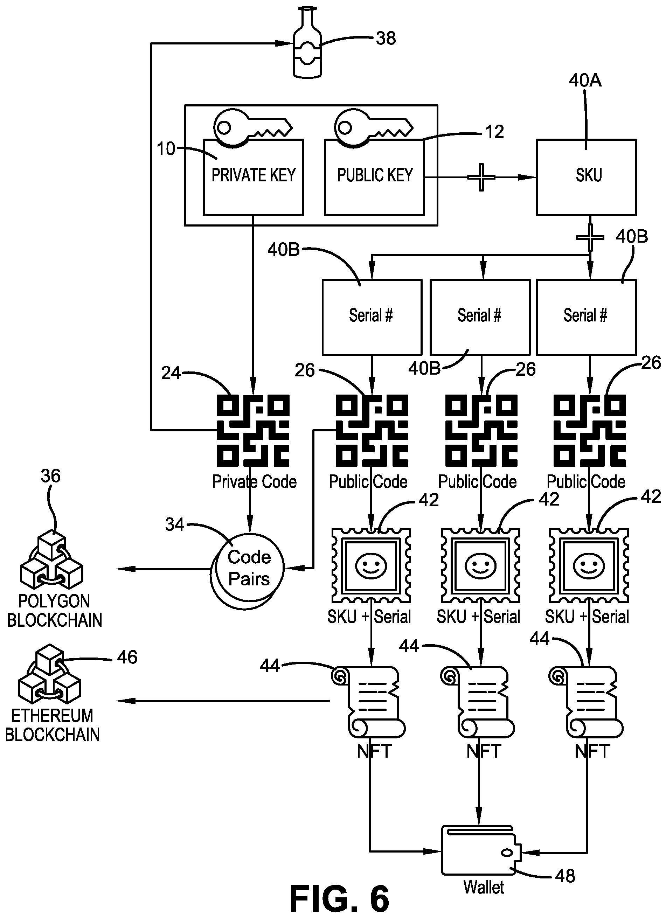

In various embodiments, the assets and/or tokens can be aggregated or divided without limiting the ability to trust-link data generated by the movement, use, manipulation, and exchange of a physical and/or virtual asset during its whole lifecycle. It is possible, moreover, for various owners to own a divided or undivided portion of a single asset. In various embodiments, assets may be divided as shown in FIGS 6 and 7.

As can be seen, FIG. 6 is substantially the same as FIG. 4 above except that it illustrates shared ownership of the asset (rather than single physical assets with single owner), with the asset 38 being divided into three NFTs having different owners. In these embodiments, the public key 12 is combined with the product SKU 40A and each one of three serial numbers 40B to produce three different public codes 26 for asset 38. The public code is then used to create three NFTs based upon asset 38. As will be apparent, public code is unique for each virtual/physical assets being tokenized, so the 3 different NFTs in FIG. 6 will have 3 different public codes. In some of these embodiments, the public codes 26 are the same and are added to 3 different sets of information 42 to produce the three different NFTs. The NFTs are saved to the Ethereum blockchain in wallet 48.

Similarly, FIG. 7 is substantially the same as FIGS. 4 and 6 above except that it shows the entire life cycle for the asset. In these embodiments, the whiskey is traced from the distillery 70 through the bottler 72, and the retailer 74 using the corresponding key pairs 71, 73, and 75. In the Example, casks 80 and 82 are produced by the distillery 70 and transported to the bottler 72 using logistics and storage 76. The first cask 80 is linked to the distillery 70 via key pair 71, which is used to prepare private code 82 and public code 84. Similarly, the second cask 86 is linked to the distillery 70 via key pair 71, which is used to prepare private code 88 and public code 90. The public code 84 for cask 80 is saved into a blockchain at block 126 and public code 90 for cask 86 is saved into a blockchain at block 124.

At the bottler 72, casks 80 and 86 are combined into bottler/vat 90 where a new code pair (private code 94 and public code 96) are generated, effectively aggregating the code pairs for cask 80 and cask 86. The public code 96 for bottler/vat 90 is saved into a blockchain at block 128. From there, as part of operations 78, the Bottler 72 prepares three bottles of the whiskey 98, 106, and 114 from the whiskey in bottler/vat 90. A new code pair is then prepared for each new bottle 98, 106, and 114 using key pair 73. Private code 100 and public code 102 were prepared for bottle 98 and the public code was saved into the blockchain at block 134. Private code 108 and public code 110 were prepared for bottle 106 and the public code was saved into the blockchain at block 132. Private code 116 and public code 118 were prepared for bottle 114 and the public code 118 was saved into the blockchain at block 130. Finally, 98, 106, and 114 were then tokenized using key pair 75 to form NFTs 104, 112, and 120, which were saved to the Ethereum blockchain 122.

### EXAMPLES

The following examples are offered to more fully illustrate the invention, but are not to be construed as limiting the scope thereof. Further, while some of examples may include conclusions about the way the invention may function, the inventor do not intend to be bound by those conclusions, but put them forth only as possible explanations. Moreover, unless noted by use of past tense, presentation of an example does not imply that an experiment or procedure was, or was not, conducted, or that results were, or were not actually obtained.

### Example 1

### (Prophetic)

In this Example, Anchor codes (i.e., data trust origins) were recorded in public blockchains by trusted authorities as a single transaction for each category of data activity. Specifically, diamond mining activities for a single rough diamond are associated to an anchor code (which was previously registered by the government as an unassigned code registration) by the mining company. This transaction then "points" to other systems and data repositories for all mining activities related to the physical diamond represented (i.e. associated to the anchor code). Another anchor transaction (associated to the same asset code) is in the 'logistics category' and all the data related to the transport of the said diamond. Another anchor transaction is in the 'manufacturing category' (taking the rough diamond to its polished state) - all the data is associated to the same anchor code. Finally, there will be another anchor transaction to record the minting of a NFT token to represent the sale of the associated diamond to a customer.

All category transactions are single entries against an anchor code pair that represents the physical and digital versions of the asset through its lifecycle. All asset related data activity pools are securely captured in "trust chain linked" associated systems such as ERPs, data repositories and secondary blockchains (private or public).

### Example 2

This example involves application of the system of the present invention to a bottle of whiskey and is shown in a series of screenshots attached as FIGS. 8A-E. FIG. 8A is a screenshot of a webpage accessible through Product Verification URL 140 using the public code 148 registered on the anchor public blockchain providing product details, the NFT (token) ID 142, and NFT owner 144. FIG. 8B is a screenshot of a webpage accessible at a URL 152 comprising the unique Anchor public key 154 and showing registration 156 of same on the blockchain. FIG. 8C is a screenshot of a webpage accessible using a URL 158 comprising the transaction hash generated by registration 156, anchor key 160, product assigned data field 162, which shows public code 164 derived from anchor key 160, the product verification URL and the Product NFT URL of the Ethereum blockchain. FIG. 8D is a screenshot of a webpage accessible using the Product NFT URL 168 and showing the NFT transaction hash 172, NFT ID 174, NFT Issuer 176, and NFT Owner 178. FIG. 8E is a screenshot of a webpage accessible using a URL 180 comprising the NFT contract address (smart contract address). It shows the product 182, NFT owner 184, smart contract 186 and NFT ID 188.

### Example 3

This example involves application of the system of the present invention to a limited edition bottle whiskey and is shown in a series of screenshots attached as FIGS. 9A-D. (See also, FIG. 7). FIG. 9A is a screenshot of a dedicated (tokenized) asset verification webpage for a single bottle of blended Scotch whiskey from a lot of 30 bottles, showing the shared ownership ID 190, dedicated asset verification URL 192, asset public code and URL in the anchor blockchain 194 and the anchor authority 196. FIG. 9B is a screenshot of a webpage accessible using the asset public key in the anchor blockchain 198 and showing tokenized share transactions 200, Physical Asset Definition and assignment transactions 202, the data structure 204 for physical asset definition and assignment transaction, and data structure 206 for tokenized share transactions. FIG. 9C is a screenshot of an asset offering description webpage 208, showing the asset tokens on the blockchain 210 and the 3 other tokens owned by the same address 212. Finally, FIG. 9D is a screenshot of a token description from public market place opensea and metadata webpage 214 showing the token metadata 216 including URLs to the dedicated asset valuation page (FIG. 9C) and anchor information.

In light of the foregoing, it should be appreciated that the present invention significantly advances the art by providing a system for trusted tokenized asset transactions that is structurally and functionally improved in a number of ways. While particular embodiments of the invention have been disclosed in detail herein, it should be appreciated that the invention is not limited thereto or thereby inasmuch as variations on the invention herein will be readily appreciated by those of ordinary skill in the art. The scope of the invention shall be appreciated from the claims that follow.

## Claims

1. A system for trust-linking data generated by the movement, use, manipulation, and exchange of a physical and/or virtual asset during a whole lifecycle, said one of physical and/or virtual asset using the tokenized digital version or physical version of said physical and/or virtual asset, independently from the same trust-chain of data recorded on two or more blockchains.

2. The system of claim 1 further comprising a code pair comprising a private code representing a physical asset and a public code representing a digital or physical asset, wherein said code pair is represented as a unique non-fungible token.

3. The system of claim 1 further comprising a code pair comprising a private code representing a physical asset and a public code representing a digital or physical asset, wherein said code pair is represented as multiple common fungible tokens.

4. The system of claim 2 wherein said private code and said public code are generated by the steps of:
A) designating a trust anchor authority having a publicly recognized wallet on a publicly recognized wallet address on a Level 1 (L1) or Level 2 (L2) public anchor codes blockchain running on a computer operably connected to a computer network or combination of linked computer networks running a blockchain platform capable of creating a non-fungible token;
B) directing said trust anchor authority to generate a random private key and saving it to a block of an anchor codes blockchain running on said blockchain platform as an unassigned code registration;
C) generating a public key from said random private key using a digital signature algorithm (DSA) running on said blockchain platform;
D) generating a 20 byte public address from said public key by first generating a 32 byte hash value for said cryptographic public key and then removing the first 12 bytes to produce said 20 byte public address, wherein said private key and said public address are together comprise an anchor code pair;
E) generating a private code from said private key using an irreversible hashing algorithm and saving said private code to platform for traceability purpose; and
F) generating a public code from said identifying information for an asset and said public address using an irreversible hashing algorithm and saving said public code to public blockchain for data traceability.

5. The system of claim 4 wherein said L1 or L2 public anchor codes blockchain (step A) can be accessed through the internet.

6. The system of claim 4 wherein said trust anchor authority (step A) is selected from the group consisting of asset brand manufacturers, third-party trusted authorities, Government authorities and combinations thereof.

7. The system of claim 4 wherein said token is created under ERC-721 or ERC1155 non-fungible token standards and generated through the ETHEREUM^{™}, ETHEREUM^{™} Classic, of ETHEREUM^{™} Virtual Machine (EVM) blockchain platform running on said computer.

8. The system of claim 4 wherein the blockchain platform (step A) is selected from the group consisting of ETHEREUM^{™}, ETHEREUM^{™} Classic, ETHEREUM^{™} Virtual Machine (EVM). EOS, DFINITY, and Hyperledger^{™}.

9. The system of claim 4 wherein the blockchain platform (step A) has the ability to execute smart contract or chain code.

10. The system of claim 4 wherein the blockchain platform (step A) is ETHEREUM^{™}, ETHEREUM^{™} Classic, or ETHEREUM^{™} Virtual Machine (EVM).

11. The system of claim 4 wherein the step of generating public key (step C) is performed using an Elliptic Curve Digital Signature Algorithm.

12. The system of claim 4 wherein the step of generating a 20 byte public address in step D is performed using a Keccak-256 hashing algorithm.

13. The system of claim 4 wherein the step of generating the public code (step F) further comprises the steps of:
F1) calculating a first hash value by running said identifying information through an irreversible hashing algorithm;
F2) calculating a second hash value by running said identifying information through an irreversible hashing algorithm; and
F3) calculating the public code by combining said first and second hash values and running the combined first and second hash values through an irreversible hashing algorithm, thereby linking the asset to the public code.

14. The system of claim 13 wherein the said first hash value is calculated using a sha-256 hashing algorithm.

15. The system of claim 13 wherein the said second hash value is calculated using a sha-256 hashing algorithm.

16. The system of claim 13 wherein the said public code is calculated using a sha-256 hashing algorithm.

17. The system of claim 4 wherein said identifying information in step F is one or more of a serial number, an identification number, a unique product trace code, and a stock-keeping unit (SKU) for said asset.

18. The system of claim 4 further comprising recording one or more origin transactions mapping an asset to an unassigned code registration on said anchor codes blockchain.

19. The system of claim 4 further comprising recording one or more origin transactions of a specific tangible asset category to said anchor codes blockchain.

20. The system of claims 18 wherein each Anchor origin transaction contains a data structure referencing tangible asset categories recorded therein and links to one or more secondary public or private website linked to or comprising blockchain URLs containing related asset and token information.

21. The system of claims 18 wherein each Anchor origin transaction contains a data structure referencing tangible asset categories recorded and links to secondary public and/or private website and blockchain URLs of related asset and token information.

22. The system of claim 4 further comprising recording an origin transaction to said anchor codes blockchain tokenizing a physical asset to form a non-fungible token comprising key/value pairs that provide an asset's description, attributes characteristics and/or values, wherein said token is saved to an asset tokens blockchain.

23. A method of forward data trust-chaining using the system of claims 1 or 2 comprising:
A) scanning a physical asset's Private code from a front-end mobile application or web application and calling the backend API;
B) fetching the Key pair from the backend API, retrieving the public information for key pair from blockchain, and retrieving data from the blockchain;
C) Using the data retrieved from blockchain, go to verification URL;
D) follow the Verification URL forward to a product web site using metadata of a tokenized data structure;
E) identifying the anchor code and owner detail on a product web site linked to said Verification URL;
F) follow the Anchor code URL to blockchain transaction which contains product transaction details and secondary blockchain transaction URL; and
G) cross matching the product details on the product web site and the token on the blockchain to confirm authenticity of the product.

24. A method of reverse data trust-chaining comprising using the system of claims 1 or 2 comprising:
A) accessing a virtual asset's Public Code on the consumer site or in a token metadata, said consumer site comprising links to a Verification URL and an anchor code URL;
B) following the Verification URL forward to a product website comprising an anchor code and owner details;
C) following the anchor code URL to a blockchain transaction containing product transaction details and secondary blockchain transaction URL; and
D) cross matching the details for the product on the product website and the token on the blockchain.
